# EUROPÄISCHE PATENTANMELDUNG

(11) **EP 4 435 695 A1**
(43) Veröffentlichungstag der Anmeldung: **25.09.2024**
(21) Anmeldenummer: 23163845.3
(22) Anmeldetag: 23.03.2023
(51) Int. Cl.: G06Q 10/0875, G06Q 10/30

(54) **VERFAHREN UND SYSTEM ZUM OPTIMIERTEN RECYCLING EINES PRODUKTES**

(71) Anmelder: Primetals Technologies Austria GmbH, 4031 Linz (AT)
(72) Erfinder: Melcher, Andreas, 4491 Niederneukirchen (AT)
(74) Vertreter: Metals@Linz

(57) **Zusammenfassung**

Die Erfindung ist auf dem Gebiet von Recycling von Produkten. Die Erfindung betrifft einerseits ein Verfahren zum optimierten Recycling eines Produktes und andererseits ein System zum optimierten Recycling eines Produktes.

Die Aufgabe der vorliegenden Erfindung ist es ein Verfahren zur Verfügung zu stellen, welches eine möglichst hochwertige und optimale Wiederverwendung eines der Wiederverwertung zugeführten Produktes zu erreichen.

Die Aufgabe wird gelöst durch das Produkt (1), welches eine eindeutig identifizierbare und maschinenlesbare Identifizierungsmarke (2) aufweist. Die maschinenlesbare Identifizierungsmarke (2) ist auf einer Datenbank, welche auf einem Computersystem mit Speicher abgespeichert ist, dem Produkt (1) zugeordnet ist und zusätzlich sind Informationen des Produktes (1) in der Datenbank mit diesem verknüpft, wobei die Informationen zumindest eine Recyclinganweisung umfasst.

Des Weiteren wird die Aufgabe auch durch ein System gelöst, welches eine Leseeinheit (3) zum Auslesen der maschinenlesbaren Identifizierungsmarke (2) aufweist und die Leseeinheit (3) mit einem Computersystem mit einem Speicher (4) verknüpft ist.

## Beschreibung

### Gebiet der Technik

Die Erfindung ist auf dem Gebiet von Recycling von Produkten. Die Erfindung betrifft einerseits ein Verfahren zum optimierten Recycling eines Produktes und andererseits ein System zum optimierten Recycling eines Produktes.

### Stand der Technik

Bei der Aufbereitung von Eisen- und Stahlschrotten wird in der Regel, abhängig von den in der metallurgischen Anlage zu erzeugenden Qualitäten des Produktes, begrenzter Aufwand betrieben um diese qualitativ, analytisch und in Bezug auf mechanische Eigenschaften vorzusortieren und dem Schmelzprozess bedarfsgerecht zuzuführen.

Dieser Aufwand, insbesondere in Bezug auf die analytische Zusammensetzung der Materialien aber auch in Bezug auf eventuell notwendige Vorverarbeitung, wie z.B. Reinigen, Schneiden, Shreddern, Sortieren, etc. stellt hohe technische Herausforderungen an Schrottsammler und Aufbereiter, welche derzeit nur begrenzt angenommen werden und oft in undefinierten, minderwertigen Schrottgemischen resultieren.

Es ist daher ebenfalls gängige Praxis für bestimmte Zielanalysen, qualitativ zu hochwertigen und zu teuren Schrott einzusetzen und/oder die Schmelzaggregate mit edleren Einsatzstoffen (HM, DRI, HBI) zu beschicken, um eine entsprechende Verringerung des Schrotteinsatzes zu erreichen und damit Probleme mit der Abstichanalyse zu vermeiden. Durch den stetig steigenden Druck in der Grundstoffindustrie, den CO2 Ausstoß zu reduzieren und die Produktion umweltfreundlicher zu gestalten, planen viele Grundstoffproduzenten vermehrt recycelte Materialien einzusetzen. In der Stahlindustrie führt dies dazu, dass von der Hochofenroute auf die Produktion von Stahl mit dem Elektrolichtbogenofen umgestellt werden soll. Hierfür wird eine Lösung für den optimalen Schrotteinsatz immer wichtiger.

Um die recycelten Materialien möglichst optimal einzusetzen ist eine Sortenreine Trennung der Materialien anzustreben.

### Zusammenfassung der Erfindung

Die Aufgabe der vorliegenden Erfindung ist es ein Verfahren zur Verfügung zu stellen, welches eine möglichst hochwertige und optimale Wiederverwendung eines der Wiederverwertung zugeführten Produktes zu erreichen.

Die Aufgabe wird gelöst durch das Produkt, welches eine eindeutig identifizierbare und maschinenlesbare Identifizierungsmarke aufweist. Die maschinenlesbare Identifizierungsmarke ist auf einer Datenbank, welche auf einem Computersystem mit Speicher abgespeichert ist, dem Produkt zugeordnet und zusätzlich sind Informationen des Produktes in der Datenbank mit diesem verknüpft, wobei die Informationen zumindest eine Recyclinganweisung umfasst.

Bei der vorliegenden Erfindung wird unter Produkt nicht nur ein Endprodukt verstanden, sondern es können auch verschiedene Zwischenprodukte oder auch mehrere Produkte, welche durch den Zusammenbau ein Endprodukt ergeben, sein. Es kann sich bei Produkten beispielsweise auch um Ersatzteile handeln.

Die vorgeschlagene Lösung ist ein Datenbankgestütztes System zur Verfolgung von Materialien und Komponenten über deren gesamten Lebenszyklus. Es sammelt beispielsweise Informationen aus bestehenden Produktionsdatenbanken entlang der Herstellungsroute von Komponenten, angefangen beispielsweise von Stahlwerken, Gießereien, Schmieden, Zulieferbetrieben bis hin zu den Montagelinien der Hersteller.

Das Produkt, welches in Verwendung ist, wird mit einer maschinenlesbaren Identifizierungsmarke - beispielsweise ein QR-Code oder RFID Transponder - eindeutig gekennzeichnet und in der Datenbank können dann Informationen eingetragen werden oder es werden Informationen miteinander verknüpft. Die Informationen können beispielsweise auf Speichersystemen der jeweiligen Hersteller von Produkten und / oder Zwischenprodukten liegen. Es ist aber auch denkbar - je nach Praktikabilität - während aller oder zumindest mancher Schritte des Herstellungsprozesses die maschinenlesbare Identifizierungsmarke am jeweiligen Produkt anzubringen. Es ist in diesem Fall auch denkbar, dass die maschinenlesbare Identifizierungsmarke, sich während des Produktionsprozesses ändert. Wenn beispielsweise aus einem Zwischenprodukt mehrere baugleiche Endprodukte erzeugt werden, dann wird auf jedes Endprodukt eine eigene maschinenlesbare Identifizierungsmarke aufgebracht. Ein Beispiel hierfür ist ein Stahlblech, aus welchem im Anschluss mehrere Kotflügel für ein Auto hergestellt werden. In diesem Fall hat das Stahlblech eine eigenen maschinenlesbare Identifizierungsmarke und jedes Endprodukt ebenfalls wieder eine eigene maschinenlesbare Identifizierungsmarke.

Durch die maschinenlesbare Identifizierungsmarke ist es möglich zielgerichtete Recyclinganweisungen für Einzelteile und/oder Baugruppen für ein späteres Recycling zur Verfügung zu stellen, welche in der Datenbank hinterlegt sind.

Durch Einhaltung dieser Recyclinganweisungen werden den Industrieanlagen Betreibern analytisch definierte und korrekt vorverarbeitete recycelte Ausgangsstoffe zur Verwendung im Herstellungsprozess neuer Produkte zur Verfügung gestellt.

In einer bevorzugten Ausführungsform wird während jeden Herstellungsschritt des Produktes für das Recycling des Produktes Recyclingvorschriften in die Datenbank eingefügt. Dies hat den Vorteil, dass jederzeit nachvollzogen werden kann, was mit dem Produkt nach jedem Herstellungsschritt gemacht werden kann. Dies ist dann wichtig, wenn das Produkt als Ausschuss qualifiziert wird oder wenn es als Zwischenprodukt auf einem Lager liegt und in weiterer Folge dann nicht mehr benötigt wird und dem Recycling zugeführt wird.

Eine zweckmäßige Ausführung sieht vor, dass die Information des Produktes zusätzlich zumindest eine der nachfolgenden Daten umfasst:
- die einzelnen Materialien, welche das Produkt umfasst,
- CO₂ Abdruck für die Herstellung des Produktes,
- Lebenszyklusdaten,
- Produktionsdaten.

Durch die Information über die einzelnen Materialien, welche das Produkt umfasst, kann beispielsweise ein Konsument herausfinden aus was sich das Produkt zusammensetzt und möglicherweise seine Kaufentscheidung festlegen.

Durch die Information des CO₂ Abdrucks kann ebenfalls die Nachhaltigkeit und die Umweltschonende Herstellung herausgefunden werden und dem Konsumenten die Kaufentscheidung erleichtern. Diese Information kann vom Hersteller zum gezielten Vermarkten des Produktes als umweltfreundlich, grün oder CO₂ reduziert verwendet werden.

Die Lebenszyklusdaten erlauben die Nachverfolgbarkeit, wann, wo und von wem das Produkt erzeugt worden ist, und möglicherweise werden auch allfällige Wartungen und Reparaturen angeführt. Des Weiteren ist auch denkbar, dass die Nutzungsdauer und Einsatzzeiten erfasst werden. In den Produktionsdaten sind beispielsweise ein Hersteller, ein Produktionsort und / oder genaue Zusammensetzung des Produktes angeführt. In den meisten Fällen werden mehrere Hersteller angeführt, welche unterschiedliche Arbeitsschritte ausgeführt haben. In diesem Fall können alle Informationen der einzelnen Arbeitsschritte angeführt werden.

Eine besonders vorteilhafte Ausführung sieht vor, dass das Produkt als Hauptbestandteil ein Metall aufweist, besonders bevorzugt ist der Hauptbestandteil Stahl. Die Herstellung von Metallen, insbesondere von Stahl benötigt einen sehr hohen Energieaufwand. Wenn diese Produkte einem optimierten Recycling zugeführt werden können, kann eine besonders hohe Energieeinsparung realisiert werden.

Durch Einhaltung der Recyclinganweisungen werden den metallurgischen Industrieanlagen Betreibern analytisch definierte und korrekt vorverarbeitete Schrotte zur Verwendung im Schmelzprozess zur Verfügung gestellt. Dies erlaubt eine besonders Ressourcen schonende wieder Verwertung des Produktes.

Eine vorteilhafte Ausführungsform sieht vor, dass die Recyclinganweisung zumindest einen der folgenden Arbeitsschritte umfasst:
- Schreddern vom Produkt,
- Entfernen von Beschichtungen,
- Entfernen von Bauteilen, welche andere Werkstoffeigenschaften aufweisen,
- Schneiden,
- Pressen,
- Zerlegen des Produktes in Baugruppen oder Einzelteile nach vorgegebenen Arbeitsschritten.

Eine Recyclinganweisung für eine Autotür kann beispielsweise wie folgt aussehen.
- Schritt 1:: Entfernen der Gummidichtungen
- Schritt 2:: Entfernen der Kunststoffabdeckungen
- Schritt 3:: Entfernen der Glasscheibe
- Schritt 4:: Entfernen der elektrischen Bauteile inklusive der Verkabelung - beispielsweise elektrischer Fensterheber
- Schritt 5:: Schreddern der metallischen Türbauteile
- Schritt 6:: Sieben der zuvor geschredderten Türbauteile

Durch das Schreddern wird ein großer Teil von organischen Verunreinigungen - wie beispielsweise die Lackierung - mechanisch entfernt. Das anschließende Sieben von geschredderten Türbauteilen führt zur Trennung von Lackpartikeln und geschredderten metallischen Türbauteilen.

Zu jedem der oben angeführten Schritte können jeweils detaillierte Arbeitsanweisungen und / oder Zeichnungen hinterlegt werden. Es ist auch denkbar, dass ein Programmcode für einen Roboter abrufbar ist, in welchem die Arbeitsschritte für den Roboter bereits programmiert sind.

Eine besonders zweckmäßige Ausführung sieht vor, dass mehrere Produkte zu einem Endprodukt zusammengebaut sind. Das Endprodukt weist eine eigene maschinenlesbare Identifizierungsmarke auf, unter welchem alle Produkte, welche im Endprodukt eingebaut sind, abgerufen werden können. Dies hat einerseits den Vorteil, dass unter der Recyclingvorschrift genaue Arbeitsschritte wie das Endprodukt zerlegt werden soll angeführt werden können. Des Weiteren ist auch denkbar, dass je nach gewünschter Qualität eines benötigten Recyclingproduktes nur manche Recyclingschritte durchzuführen sind. Es ist also denkbar, dass im Endprodukt unterschiedliche Qualitäten des Recyclingproduktes festgelegt sind. Wenn beispielsweise ein Stahl mit geringerer Qualität erzeugt werden soll, ist keine Zerlegung aller miteinander verbauten Stahlsorten erforderlich. Wenn allerdings ein sehr hochwertiger Stahl erzeugt werden soll, kann es sehr wohl sinnvoll sein die Bauteile aus Stahl mit geringer Qualität abzutrennen.

Eine bevorzugte Ausführung sieht vor, dass die Datenbank mit Informationen während der Nutzung des Produktes erweitert wird.

Es können während der Nutzung des Produktes Informationen hinzugefügt werden, welche für das Recycling hilfreich sein können, beispielsweise wenn Reparaturen durchgeführt werden und ein anderes Material für die Reparatur verwendet wird, als zuvor verwendet wurde.

Eine vorteilhafte Ausführung sieht vor, dass die Informationen benutzerspezifisch festgelegt werden und einem jeweiligen Benutzer nur Informationen bereitgestellt werden, welche für seinen Bereich relevant sind und vom jeweiligen Benutzer auch umgesetzt werden können.

Damit der jeweilige Benutzer nicht eine Vielzahl an Informationen erhält, sondern jeweils nur jene die für Ihn relevant sind. So braucht beispielsweise eine Reparaturwerkstätte nicht die einzelnen Recyclingschritte zu kennen, sondern nur zu welchem Recyclingbetrieb das Produkt übermittelt werden soll. Für einen Endverbraucher ist es auch nur wichtig zu wissen, wo er das Produkt nach dem Ende der Benutzungsdauer entsorgen kann, damit es dem optimalen Recycling zugeführt werden kann.

Die Aufgabe wird auch durch ein System zum optimierten Recycling eines Produktes gelöst, welches die nachfolgenden Merkmale aufweist:
- das Produkt weist eine maschinenlesbare Identifizierungsmarke auf,
- eine Leseeinheit, welche die maschinenlesbare Identifizierungsmarke auslesen kann,
- ein Computersystem mit einem Speicher auf welchem eine Datenbank abgespeichert ist in welchem die maschinenlesbare Identifizierungsmarke mit dem Produkt verknüpft ist und weitere Informationen mit dem Produkt verknüpft sind, wobei die Informationen zumindest eine Recyclinganweisung aufweist,
- die Leseeinheit mit dem Computersystem und dem Speicher verbunden ist.

Eine bevorzugte Ausführungsform sieht vor, dass die maschinenlesbare Identifizierungsmarke ein RFID Transponder oder ein QR Code ist.

Eine vorteilhafte Ausführungsform sieht vor, dass die Datenbank mit Informationen während der Nutzung des Produktes erweitert wird. Diese Informationen können beispielsweise Einsatzzeiten, durchgeführte Reparaturen oder ähnliche sein.

Eine zweckmäßige Ausführungsform sieht vor, dass die Recyclinganweisung zumindest einen der folgenden Arbeitsschritte umfasst:
- Schreddern vom Produkt,
- Entfernen von Beschichtungen,
- Entfernen von Bauteilen welche andere Werkstoffeigenschaften aufweisen,
- Schneiden,
- Pressen,
- Zerlegen des Produktes in Baugruppen oder Einzelteile nach vorgegebenen Arbeitsschritten.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
Fig 1 ein schematisch der Materialfluss vom Rohstoff zum Endprodukt und vom Endprodukt zum Recyclingprozess dargestellt.
Fig 2 ein schematisch dargestelltes erfindungsgemäßes System

### Beschreibung der Ausführungsformen

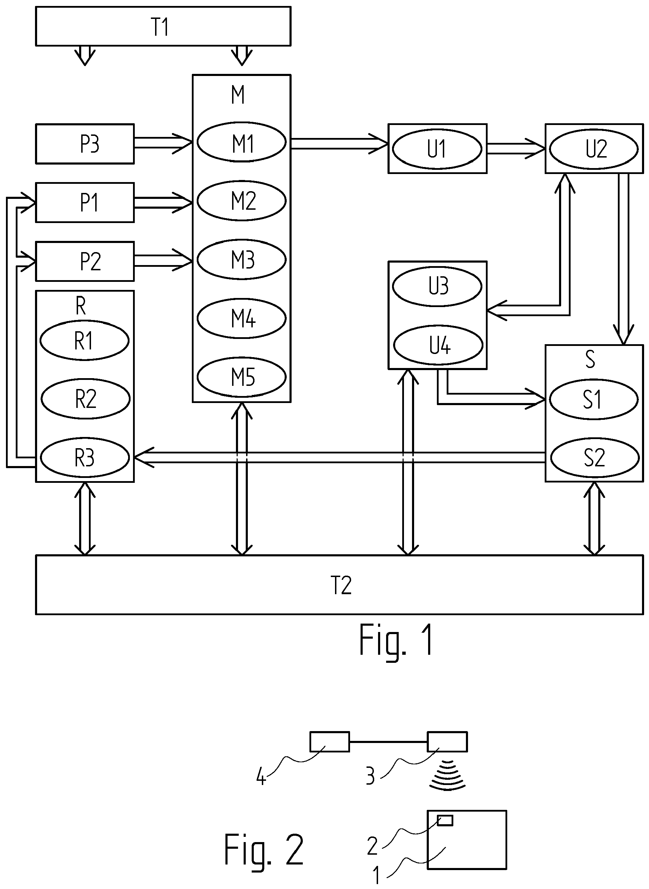

In der Fig. 1 ist schematisch ein möglicher Materialfluss vom Rohstoff zum Endprodukt und vom Endprodukt zum Recyclingprozess dargestellt.

In verschiedenen Produktionsschritten P1, P2 und / oder P3 wird aus einem Rohstoff und von recycelten Produkten ein Zwischenprodukt erzeugt. Beispielsweise wird in einem Produktionsschritt P1 mithilfe eines Elektrolichtbogenofens flüssiger Stahl erzeugt, welcher anschließend in einer Stranggussanlage und einem Walzwerk zu einem Stahlband verarbeitet wird. Als Einsatzstoff in den Elektrolichtbogenofen dient beispielsweise Stahlschrott, welcher in einem Recyclingschritt R1 sortiert und entsprechend aufbereitet wurde. Das Stahlband kann dann mit einer maschinenlesbaren Identifizierungsmarke versehen werden.

Im nächsten Schritt wurde das Zwischenprodukt einer Weiterverarbeitung M zu einem Endprodukt zugeführt. Die Weiterverarbeitung M zu einem Endprodukt kann mehrere Verarbeitungsschritte M1-M5 aufweisen. Mögliche Verarbeitungsschritte können beispielsweise Biegen, Schweißen, Beschichten, Verschrauben, Nieten, usw. sein. Am Ende entsteht ein Endprodukt, wobei das Endprodukt auch ein Ersatzteil oder ein Einzelteil eines größeren Endproduktes sein kann. Bei einem Fahrzeug sind beispielsweise viele einzelne Endprodukte darin verbaut. Während oder am Ende der Verarbeitungsschritte wird die maschinenlesbare Identifizierungsmarke in einem Arbeitsschritt T1 angebracht. Es ist denkbar, dass die maschinenlesbare Identifizierungsmarke nach jedem Verarbeitungsschritt M1-M5 angebracht wird. Dies ist vor allem auch davon abhängig, ob diese Verarbeitungsschritte M1-M5 am gleichen Ort oder ob dies an unterschiedlichen Orten und von unterschiedlichen Verarbeitungsunternehmen erfolgt. Es kann aber auch sinnvoll sein die maschinenlesbare Identifizierungsmarke bereits während der Produktion anzubringen, damit im Falle eines Ausschusses das Produkt dem optimalen Recycling zugeführt werden kann. Wenn das Endprodukt im letzten Verarbeitungsschritt M5 fertiggestellt wurde, dann kommt das Produkt in den Umlauf, wobei im ersten Umlaufschritt U1 ein Händler das Produkt übernimmt. Es ist dann denkbar, dass der Händler die maschinenlesbare Identifizierungsmarke ausliest und beispielsweise dem Käufer nachweisen kann, wo das oder die Produkte gefertigt und erzeugt wurden. Im nächsten Umlaufschritt U2 wird das Produkt vom Käufer bzw. Konsument genutzt. Das Produkt wird im Laufe der Zeit in einem weiteren Umlaufschritt U3 gewartet, repariert oder wenn das Produkt aus mehreren Produkten besteht, können auch Produkte ersetzt und ausgetauscht werden.

Wenn das Produkt ausgetauscht wird, dann wird das ausgetauschte Produkt an ein Recyclingunternehmen S geliefert. Das Produkt aus dem Umlaufschritt U2 wird nach Ende der Nutzungsdauer ebenfalls an ein Recyclingunternehmen S geliefert. Das Recyclingunternehmen liest die maschinenlesbare Identifizierungsmarke des Produktes in einem Ausleseschritt T2 aus. Danach wird entsprechend der hinterlegten Recyclinganweisungen in Recyclingaufbereitungsschritten S1, S2 das Produkt entsprechend aufbereitet und sortiert. Danach erfolgt die Lieferung an einen Recyclingprozess R. Dies kann beispielsweise auf einem Schrottplatz sein, welcher einer metallurgischen Anlage zugeordnet ist. Im Zuge des Recyclingprozess R wird ebenfalls die maschinenlesbare Identifizierungsmarke im Ausleseschritt T2 ausgelesen. Anhand der abgerufenen Recyclinganweisung werden weitere Recyclingschritte R1 - R3 durchgeführt, welche in der Datenbank hinterlegt sind und entsprechend vorgegeben sind. Diese Recyclingschritte R1 - R3 können beispielsweise Reinigen, Sortieren und / oder Mechanische Aufbereitung wie Schreddern sein. Wenn das Recyclingunternehmen R das zu recycelnde Produkt entsprechend aufbereitet hat und beispielsweise von der metallurgischen Anlage entsprechender Schrott - welcher aus dem zu recycelnden Produkt erzeugt wurde - benötigt wird, erfolgt die Lieferung an die metallurgische Anlage, welche die Produktionsschritte P1 und/oder P2 ausführen. Den metallurgischen Anlagen können auch noch andere Materialien zugeführt werden, welche für das gewünschte Produkt benötigt werden. Es können in einem Produktionsschritt P3 Produkte erzeugt werden, welche für das Endprodukt benötigt werden und für welche kein Schrott verwendet werden kann oder es gibt gerade kein für dieses Produkt benötigten Schrott.

In Fig. 2 ist schematisch ein erfindungsgemäßes System dargestellt. Dieses System beinhaltet ein Produkt 1, welches eine maschinenlesbare Identifizierungsmarke 2 aufweist. Die maschinenlesbare Identifizierungsmarke wird von einer Leseeinheit 3 ausgelesen und die ausgelesene Information wird an ein Computersystem mit einem Speicher 4 auf welchem eine Datenbank abgespeichert übermittelt. Auf der Datenbank ist die maschinenlesbare Identifizierungsmarke 2 mit dem Produkt 1 verknüpft und es sind weitere Informationen mit dem Produkt 1 verknüpft, wobei die Informationen zumindest eine Recyclinganweisung aufweist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Produkt
- 2: Identifizierungsmarke
- 3: Leseeinheit
- 4: Computersystem mit Speicher
- R1 - R3: Recyclingprozeß
- P1 - P3: Produktionsschritt
- T1: Arbeitschritt
- T2: Ausleseschritt
- U1 - U4: Umlaufschritt
- S1 - S2: Recyclingschritt

## Patentansprüche

1. Verfahren zum optimierten Recycling eines Produktes (1) **dadurch gekennzeichnet, dass** das Produkt (1) eine maschinenlesbare Identifizierungsmarke (2) aufweist, wobei die maschinenlesbare Identifizierungsmarke (2) in einer, auf einem Computersystem mit einem Speicher abgespeicherten, Datenbank dem Produkt (1) zugeordnet ist und zusätzlich auch Informationen des Produktes (1) in der Datenbank verknüpft sind, wobei die Informationen zumindest eine Recyclinganweisung umfasst.

2. Verfahren zum optimierten Recycling eines Produktes (1) nach Anspruch 1
**dadurch gekennzeichnet, dass** während jeden Herstellungsschritt des Produktes (1) für das Recycling des Produktes (1) Informationen in die Datenbank eingefügt werden.

3. Verfahren zum optimierten Recycling eines Produktes (1) nach einem der Ansprüche 1 oder 2 **dadurch gekennzeichnet, dass** die Information des Produktes (1) zusätzlich zumindest eine der nachfolgenden Daten umfasst:
- die einzelnen Materialien welches das Produkt (1) umfasst,
- CO₂ Abdruck für die Herstellung des Produktes (1),
- Lebenszyklusdaten,
- Produktionsdaten.

4. Verfahren zum optimierten Recycling eines Produktes (1) nach einem der Ansprüche 1 - 3 **dadurch gekennzeichnet, dass** das Produkt (1) als Hauptbestandteil ein Metall aufweist, besonders bevorzugt ist der Hauptbestandteil Stahl.

5. Verfahren zum optimierten Recycling eines Produktes (1) nach nach einem der Ansprüche 1 - 4 **dadurch gekennzeichnet, dass** die Recyclinganweisung zumindest einen der folgenden Arbeitsschritte umfasst:
- Schreddern vom Produkt (1),
- Entfernen von Beschichtungen,
- Entfernen von Bauteilen welche andere Werkstoffeigenschaften aufweisen,
- Schneiden,
- Pressen,
- Zerlegen des Produktes in Baugruppen oder Einzelteile nach vorgegebenen Arbeitsschritten.

6. Verfahren zum optimierten Recycling eines Produktes (1) nach einem der Ansprüche 1 - 5 **dadurch gekennzeichnet, dass** mehrere Produkte (1) zu einem Endprodukt zusammengebaut sind und das Endprodukt eine eigene maschinenlesbare Identifizierungsmarke (2) aufweist, unter welchem alle Produkte (1), welche im Endprodukt eingebaut sind, abgerufen werden können.

7. Verfahren zum optimierten Recycling eines Produktes (1) nach einem der Ansprüche 1 - 6 **dadurch gekennzeichnet, dass** die Datenbank mit Informationen während der Nutzung des Produktes (1) erweitert wird.

8. Verfahren zum optimierten Recycling eines Produktes (1) nach einem der Ansprüche 1 - 7 **dadurch gekennzeichnet, dass** die Informationen benutzerspezifisch festgelegt werden und einem jeweiligen Benutzer nur Informationen bereitgestellt werden, welche für einen Bereich des jeweiligen Benutzers relevant sind und vom jeweiligen Benutzer auch umgesetzt werden können.

9. System zum optimierten Recycling eines Produktes (1) **dadurch gekennzeichnet, dass**
- das Produkt (1) eine maschinenlesbare Identifizierungsmarke (2) aufweist,
- eine Leseeinheit (3), welche die maschinenlesbare Identifizierungsmarke (2) auslesen kann,
- ein Computersystem mit einem Speicher (4) auf welchem eine Datenbank abgespeichert ist in welcher die maschinenlesbare Identifizierungsmarke (2) mit dem Produkt (1) verknüpft ist und weitere Informationen mit dem Produkt (1) verknüpft sind, wobei die Informationen zumindest eine Recyclinganweisung aufweist,
- die Leseeinheit (3) mit dem Computersystem und dem Speicher (4) verbunden ist.

10. System zum optimierten Recycling eines Produktes (1) nach Anspruch 9 **dadurch gekennzeichnet, dass** die maschinenlesbare Identifizierungsmarke (2) ein RFID Transponder oder ein QR Code ist.

11. System zum optimierten Recycling eines Produktes (1) nach einem der Ansprüche 9 - 10 **dadurch gekennzeichnet, dass** die Datenbank mit Informationen während der Nutzung des Produktes (1) erweitert wird.

12. System zum optimierten Recycling eines Produktes (1) nach einem der Ansprüche 9 - 11 **dadurch gekennzeichnet, dass** die Recyclinganweisung zumindest einen der folgenden Arbeitsschritte umfasst:
- Schreddern vom Produkt,
- Entfernen von Beschichtungen,
- Entfernen von Bauteilen welche andere Werkstoffeigenschaften aufweisen,
- Schneiden,
- Pressen,
- Zerlegen des Produktes in Baugruppen oder Einzelteile nach vorgegebenen Arbeitsschritten.
